# EUROPEAN PATENT SPECIFICATION

(11) **EP 1 582 422 B1**
(45) Date of publication and mention of the grant of the patent: **19.09.2007**
(21) Application number: 05013801.5
(22) Date of filing: 27.11.2003
(51) Int. Cl.: B60R 21/16

(54) **Device and method for controlling an inflatable cushion**
Vorrichtung und Verfahren zur Kontrolle eines Airbags
Dispositif et méthode de contrôle pour coussin gonflable

(30) Priority: 13.12.2002 US 318913
(43) Date of publication of application: 05.10.2005
(62) Divisional of application: 03078728.7
(73) Proprietor: Delphi Technologies, Inc., Troy, MI 48007 (US)
(72) Inventor: Ryan, Shawn G., Dayton OH 45410 (US); Damian, Steven A., Springboro OH 45066 (US)
(74) Representative: Denton, Michael John

(56) References cited:
- EP-A- 0 943 499
- DE-U1- 29 805 217
- US-A1- 2001 035 637
- US-A1- 2002 117 840
- US-B1- 6 250 677
- US-B1- 6 371 517

## Description

### TECHNICAL FIELD

This disclosure relates generally to airbags for vehicles. Specifically, this disclosure relates to systems and methods for controlling the deployment of an inflatable cushion of an airbag module.

### BACKGROUND

Airbag modules have become common in modem automobiles. An airbag module typically comprises an inflatable cushion and an inflator within a housing. The module is installed in a desired position within the vehicle, such as the steering wheel, the dashboard, the seat, the A-pillar, and other locations. The inflatable cushion is stored in a folded position within the housing in fluid communication with the inflator. In response to an activation event or occurrence, a sensor provides a signal for activating the inflator. The inflator provides a supply of inflating gas to the cushion to inflate the cushion, deploying it from the housing into the vehicle.

Various methods have been employed to tie the inflation level of the inflatable cushion to specific conditions. For example, dual stage inflators have been used to increase or decrease the level of inflation of the inflatable cushion. Alternatively, variable venting schemes have been used to direct a portion of a generated inflation gas away from the cushion. Further, variable tethering systems have been used to restrict or vary the overall cushion volume.

US 2002/117840, which comprises the features mentionned in the preamble of claim 1, discloses a release mechanism of efficient construction and operation is provided to hold profile restraining air bag tethers in a shortened operative condition under a first set of predetermined conditions and to extend such tethers under a second set of predetermined conditions. The extension of the restraining tethers may be carried out in conjunction with the delivery of an increased volume of inflating gas to the air bag cushion utilizing a gas emitting inflator in conjunction with a dynamic variable inflation device to effect delivery of a proper volume of inflation gas while releasing the tethers from a restrained length condition.

US 6 371 517 discloses a variable deployment performance airbag by controlling the quantity and fluid flow path of the inflator gas into or out of an air bag module according to the present invention. The air bag module includes a slide ring mechanism disposed about an inflator and adjacent at least a portion of a cushion retainer. The slide ring mechanism comprises an annular ring having openings formed therein, wherein during rotation of the slide mechanism, the openings of the annular ring align with openings formed in the cushion retainer to define a fluid flow path away from an air bag cushion for venting some of the inflator gas. Preferably, the annular ring is rotated by attaching a pair of tethers to the annular ring and to a rear surface of the air bag cushion. As the air bag cushion inflates and reaches a predetermined pressure, the tethers are pulled causing the slide ring to rotate so that the openings in the annular ring and cushion retainer align directing an amount of inflator gas away from the air bag cushion.

US 2001/035637 discloses an air bag system includes a housing substantially enclosing a gas emitting inflator and a compact undeployed air bag. The system further includes a moveable member that controls flow of gas into the air bag by controlling items such as tether elements and venting openings that, in turn, control the amount of gas released into the bag and the shape of the bag upon deployment.

US 6 250 677 discloses an airbag device formed of an airbag, a holding device for holding the airbag, a gas supply device for supplying gas into the airbag to inflate the same, and an adjusting device connected to the holding device. Upon inflation of the airbag, the adjusting device is actuated to move the holding device for adjusting a location of the airbag. When a vehicle collision speed is less than a predetermined speed, or when a weight of an occupant in the seat is less than a predetermined value, upon inflation of the airbag, the holding device is moved backward. Thus, the distal end position of the airbag is adjusted in accordance with the vehicle collision speed and the weight of the occupant.

EP-A-0 943 499 discloses an airbag protection system which adapts to the shape and position of the person being protected has a number of internal ties which limit further extension when the expanding airbag meets the person. This is achieved by having the ties on reels fitted to fixed anchorage points and with a self braking effect when the extension of the ties is retarded. An alternate design has pairs of ties as one length looped over braking reels. The braking control can be linked to optic sensors which monitor the extension of the ties. The shape and position of the person to be protected can be determined by a ranging system and programmed into the airbag inflation control.

DE 298 05 217 discloses an airbag in which a tether internal to the airbag which affects the shape of the airbag in the unfolded condition.

### SUMMARY

The present invention is as set out in the accompanying claims. In the present invention the tension producing device is a torsion bar.

The above-described and other features of the present disclosure will be appreciated and understood by those skilled in the art from the following detailed description, drawing, and appended claims.

### DRAWINGS

### DESCRIPTION OF THE EMBODIMENTS

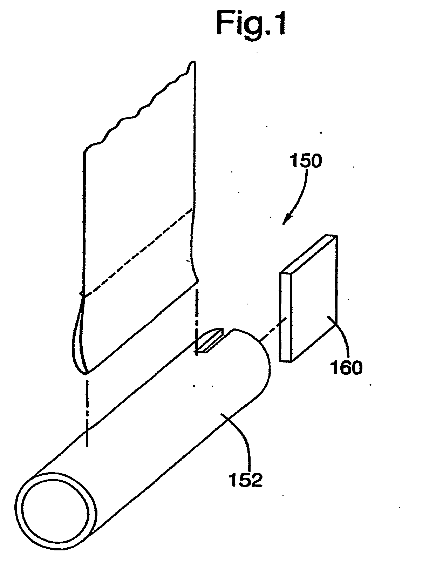

In Figure 1, device 150 comprises a deformable torsion bar 152. In this embodiment a portion of the tether is wound about the torsion bar. The torsion bar is secured to the housing of the airbag module through the use of a securement plate 160. Torsion bar 152 is configured to be fixedly secured to securement plate 160 at one end and securement plate 160 is permanently secured to the housing of the airbag module. Upon deployment of the inflatable cushion a portion of the tether unfurls freely with the inflatable cushion until a desired length corresponding to a desired excursion or un-modified deployment of the cushion is reached, at this point further movement of the tether is dependent upon deformation of torsion bar 152. Accordingly, the characteristics of torsion bar 152 will apply tension to the tether and depending upon the point of securement of the other end of the tether (e.g., opposite to torsion bar 152) deployment of the inflatable cushion is retarded or restricted due to this tension while deployment in other directions is not restricted.

Accordingly, and through the restrictive forces of the tether the deployment characteristics of the inflatable cushion are modified. For example, rearward excursion of the inflatable cushion is limited while radial or lateral (cross car) deployment is not restricted. In accordance with the present disclosure device 150 and torsion bar 152 are secured to the housing of the inflatable cushion and the airbag module is configured to allow the tether to be secured to the torsion bar at one end and a portion of the inflatable cushion at the other end (preferably an interior surface of the inflatable cushion). Thus, the tether will pass through the inflation opening of the inflatable cushion, which is configured to receive the inflation gases of the inflator. Alternatively, the tether will pass through another opening in the inflatable cushion.

## Claims

1. A device (50) for manipulating the deployment characteristics of an inflatable cushion (20) of an airbag module (14), comprising:
a tether (46) being securable to an interior surface of such a cushion at one end and tension producing device at the other, said tether having a slack portion (48) disposed between the cushion and said tension producing device;
wherein said slack portion allows the cushion to expand freely until said slack portion becomes taut and said tension producing device allows further deployment of the point of securement of said tether to the cushion at a slower rate, **characterized in that** said tension producing device is a torsion bar (152) configured to deform upon the application of a force to said torsion bar by said tether, said torsion bar being secured to the airbag module.

2. The device as in claim 1, wherein said tension device applies tension to said tether after the inflatable cushion is inflated to a first configuration, the inflatable cushion expands to a second configuration after said tension device applies tension to said tether, said second configuration having a greater deployment proportion in a first direction with respect to said first configuration.

3. The device as in claim 2, wherein said first direction corresponds to a radial direction of the inflatable cushion.

4. An airbag module (14), comprising a device according to any one of claims 1 to 3.

5. A method for varying the deployment characteristics of an inflatable cushion (20) of an airbag module (14), comprising:
inflating the cushion to a first configuration wherein the cushion expands in a first direction and a second direction; and
limiting the expansion of the cushion in the first direction using a device according to claim 1 at the other.

## Patentansprüche

1. Vorrichtung (50) zum Beeinflussen der Entfaltungseigenschaften eines aufblasbaren Kissens (20) eines Airbagmoduls (14), umfassend:
ein Halteseil (46), das an einer inneren Fläche solch eines Kissens an einem Ende befestigt werden kann, und eine Spannungserzeugungsvorrichtung an dem anderen, wobei das Halteseil einen lockeren Abschnitt (48) aufweist, der zwischen dem Kissen und der Spannungserzeugungsvorrichtung angeordnet ist;
wobei der lockere Abschnitt zulässt, dass das Kissen sich frei ausdehnt, bis der lockere Abschnitt straff wird, und die Spannungserzeugungsvorrichtung eine weitere Entfaltung des Befestigungspunktes des Halteseils an dem Kissen bei einer geringeren Geschwindigkeit zulässt,
**dadurch gekennzeichnet, dass**
die Spannungserzeugungsvorrichtung ein Drehstab (152) ist, der derart ausgestaltet ist, dass er sich beim Aufbringen einer Kraft auf den Drehstab durch das Halteseil verformt, wobei der Drehstab an dem Airbagmodul befestigt ist.

2. Vorrichtung nach Anspruch 1, wobei die Spannungsvorrichtung eine Spannung auf das Halteseil aufbringt, nachdem das aufblasbare Kissen zu einer ersten Konfiguration aufgeblasen ist, wobei das aufblasbare Kissen sich zu einer zweiten Konfiguration ausdehnt, nachdem die Spannungsvorrichtung eine Spannung auf das Halteseil aufbringt, wobei die zweite Konfiguration einen größeren Entfaltungsanteil in einer ersten Richtung in Bezug auf die erste Konfiguration aufweist.

3. Vorrichtung nach Anspruch 2, wobei die erste Richtung einer radialen Richtung des aufblasbaren Kissens entspricht.

4. Airbagmodul (14), umfassend eine Vorrichtung nach einem der Ansprüche 1 bis 3.

5. Verfahren zum Variieren der Entfaltungseigenschaften eines aufblasbaren Kissens (20) eines Airbagmoduls (14), umfassend die Schritte:
Aufblasen des Kissens zu einer ersten Konfiguration, wobei das Kissen sich in einer ersten Richtung und einer zweiten Richtung ausdehnt; und
Begrenzen der Ausdehnung des Kissens in der ersten Richtung unter Verwendung einer Vorrichtung nach Anspruch 1 an der anderen:

## Revendications

1. Dispositif (50) pour manipuler les caractéristiques de déploiement d'un coussin gonflable (20) d'un module de coussin gonflable de sécurité (14), comprenant :
une amarre (46) susceptible d'être fixée sur une surface intérieure d'un tel coussin, à une extrémité, et un dispositif tendeur sur l'autre, ladite amarre comprenant une partie lâche (48) disposée entre le coussin et ledit dispositif tendeur ;
dans lequel ladite partie lâche permet au coussin de se déployer librement, jusqu'à ce que ladite partie lâche soit tendue, et ledit dispositif tendeur permet une continuation du déploiement du point de fixation de ladite amarre sur le coussin, à une vitesse plus lente, **caractérisé en ce que** ledit dispositif tendeur est constitué d'une barre de torsion (152) configurée pour se déformer sous l'application d'une force appliquée sur ladite barre de torsion par ladite amarre, ladite barre de torsion étant fixée au module de coussin gonflable de sécurité.

2. Dispositif selon la revendication 1, dans lequel ledit dispositif tendeur applique une tension mécanique sur ladite amarre, après que le coussin gonflable a été gonflé à une première configuration, le coussin gonflable s'expanse à une deuxième configuration, après que ledit dispositif tendeur a appliqué une tension mécanique sur ladite amarre, ladite deuxième configuration ayant une proportion de déploiement supérieure dans une première direction par rapport à ladite première configuration.

3. Dispositif selon la revendication 2, dans lequel ladite première direction correspond à une direction radiale du coussin gonflable.

4. Module de coussin gonflable (14) comprenant un dispositif selon l'une des revendications 1 à 3.

5. Procédé pour modifier les caractéristiques de déploiement d'un coussin gonflable (20) d'un module de coussin gonflable de sécurité (14), comprenant :
le gonflage du coussin à une première configuration dans laquelle le coussin s'expanse en une première direction et en une deuxième direction ; et
la limitation de l'expansion du coussin dans la première direction en utilisant un dispositif selon la revendication 1 à l'autre.
